(19) Europäisches Patentamt
European Patent Office
Office européen des brevets

(11) **EP 4 245 440 A1**

(12) **EUROPEAN PATENT APPLICATION**

(43) Date of publication:
**20.09.2023 Bulletin 2023/38**

(21) Application number: **22162312.7**

(22) Date of filing: **15.03.2022**

(51) International Patent Classification (IPC):
**B22F 10/14** (2021.01)    **B22F 10/20** (2021.01)
**B22F 10/28** (2021.01)    **B22F 10/31** (2021.01)
**B22F 12/90** (2021.01)    **B33Y 10/00** (2015.01)
**B33Y 50/02** (2015.01)    **G05B 19/4099** (2006.01)
**B22F 10/85** (2021.01)    **B22F 10/366** (2021.01)
**B22F 10/38** (2021.01)

(52) Cooperative Patent Classification (CPC):
(C-Sets available)
**B33Y 10/00; B22F 10/14; B22F 10/20; B22F 10/28;**
**B22F 10/31; B22F 10/366; B22F 10/38;**
**B22F 10/85; B22F 12/90; B33Y 50/02;**
**G05B 19/41875;** B22F 2202/07; B22F 2203/03;
B22F 2999/00; G05B 2219/32018;      (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Amiquam SA**
**1196 Gland (CH)**

(72) Inventors:
• **Lany, Marc**
**1180 Rolle (CH)**
• **Revaz, Bernard**
**1205 Genève (CH)**

• **Santi, Gilles**
**1007 Lausanne (CH)**
• **Spierings, Adriaan B.**
**9300 Wittenbach (CH)**
• **Spurek, Marvin A.**
**9000 St. Gallen (CH)**
• **Wicht, Jonatan**
**1260 Nyon (CH)**
• **Berthoud, Alain**
**1219 Châtelaine (CH)**

(74) Representative: **P&TS SA (AG, Ltd.)**
**Avenue J.-J. Rousseau 4**
**P.O. Box 2848**
**2001 Neuchâtel (CH)**

(54) **METHOD FOR OPTIMIZING PROCESS PARAMETERS OF AN ADDITIVE MANUFACTURING PROCESS**

(57) The present invention relates to a method for optimizing one or more process parameters of an additive manufacturing process, comprising, prior to the step of manufacturing at least AM part, preferably a metal AM part, the steps of :

a. generating, on a computing device, a 3D digital model of at least one calibration sample, preferably a set of calibration samples, to be manufactured by the additive manufacturing process;

b. manufacturing the calibration sample ($c_i$), preferably the set of calibration samples ($c_1 \ldots c_i \ldots c_n$) on a build platform (P) of an additive manufacturing system, the calibration sample ($c_i$) or each calibration sample ($c_1, c_2 \ldots c_i \ldots c_n$) being monitored by at least one electromagnetic sensor as it is being manufactured according to the 3D digital model, wherein the calibration sample or each calibration sample is made up of two or more test coupons ($c_{i,1} \ldots c_{i,j} \ldots c_{i,m}$), preferably on top of each other, for obtaining at least one optimized set of process parameters ($p_{i,opt}$), and

c. storing the at least one optimized set of process parameters ($p_{i,opt}$) for subsequent used during the building process of said at least AM part which is representative of the test coupon ($c_{i,j}$).

**(Cont. next page)**

Test coupon $c_{i,j}$ with $p_{i,j}$

In situ ECT measurement of quality factor

Data evaluation

Optimized set of parameters

$p_{i,1}$

$Q\ (c_{i,\,j})$

$p_{i,\,opt}$

$c_{i,\,j}$

$p_{i,\,j+1}$

Next set of parameters

**Fig. 5**

(52) Cooperative Patent Classification (CPC): (Cont.)
G05B 2219/32215; G05B 2219/36253

C-Sets
B22F 2999/00, B22F 12/90, B22F 2202/07

# Description

## Field of the invention

The present invention relates to a method for optimizing process parameters of an additive manufacturing process using sequential, layer by layer deposition of metal or non-metal material such as SLM (Selective Laser Melting), DMLS (Direct Metal Laser Sintering), Electron Beam Melting (EBM), direct liquid metal deposition and binder jetting.

## Description of related art

The recent evolution of the domain of additive manufacturing (AM) provides excellent tools not only for rapid and cost-effective manufacturing of prototypes and products but also for a single on-demand component, for a pre-production series of components and for production of a limited number of components. In particular, there is an increasing interest in manufacturing high value-added components with complex geometries that are hard or impossible to manufacture with traditional machining. However, the control of the quality of these components that have to comply with given quality standards and technical requirements so as to allow a use in highly demanding and regulated application fields is still a challenge.

In an additive manufacturing process, a manufacturing anomaly (e.g. non-intended variation of the structural, geometrical, material integrity, or material properties of the final manufactured component) could arise due to different factors, in particular a mismatch or an unintended drift of manufacturing parameters, an inconsistency in the 3-dimensional (3D) model of the component, an incorrect application of a material layer, an unintended machine condition, a flaw in the powder material, or a bad thermal management resulting in hot spots and related geometrical or material defects.

Depending on the relevance and of the typology of the variation as well as depending on the applied quality standards and technical requirements, the manufacturing anomaly can represent either an acceptable imperfection or an unacceptable flaw (a local defect, or increased material porosity) which could potentially lead to a malfunction or a premature mechanical failure of the component.

In Power Bed Fusion (PBF) applications, the melting of metal powder by an energy beam and successful mastering of the whole manufacturing procedure requires complex management, because multitudes of variables enter the additive manufacturing process.

Process parameters influence the mechanical and structural properties of the metal piece to be manufactured, and they vary depending on the kind of material used and the specific position in the part in relation to the rest of the component. For example, a change in power of the energy beam will be expressed differently in the mechanical properties of the melted material of steel, titanium or aluminium. In addition, a compromise must be found on the quality of the part to be manufactured and the process parameters influencing the speed of the additive manufacturing process for production throughput considerations. Parts which are not subjected to high mechanical stress may for example have a degree of acceptable porosity and therefore the scan speed and the layer thickness may be increased to shorten the manufacturing time. Conversely, parts subjected to high mechanical stress such as aero-engine components, or certain medical devices require very high relative density, i.e., low porosity, to avoid pre-mature failure.

Prior to printing a metal piece, it is therefore essential to determine optimal process parameters considering the above factors. For Laser Powder Bed Fusion, a way to define the process parameters consists in printing and testing samples, according to a test matrix of various combinations of laser power, laser scanning velocity, hatch distance, layer thickness combinations among other parameters. In addition, the powder properties (for instance the particle size distribution, particle morphology) and the laser scanning strategy can be integrated in the test matrix.

More particularly, several calibration samples are manufactured on the build platform, whereby each calibration sample is manufactured with a unique combination of influencing process parameters. The quality of each calibration sample is then determined using different destructive and non-destructive techniques such as CT scanning as disclosed for example in US2020272128, optical metallography, SEM, EBSD, X-Ray diffraction, dimensional, surface metrology and the Archimedes method (for density measurement), revealing various defect types such as cracking, porosity, geometrical deviations, microstructural deviations, chemical deviations, lack of fusion, inclusions, or residual stress. Finding the optimal process parameters is therefore tedious, time consuming, and costly.

To address these problems, it is known to dispense with calibration samples and to scan with sensors directly the AM part as it is being manufactured to optimize the process parameters during the manufacturing process as a function of data provided by the sensors. On-the-fly scanning methods on AM parts are disclosed for example in WO2018217903A1 and US20190004496.

These on-the-fly scanning methods have the inconvenience to be non-compliant for AM part certification as the process parameters set prior to the manufacturing of the AM part are essential to the certification. In addition, these methods may use machine learning algorithms to optimize process parameters. These machine learning algorithms are so opaque that users do not necessarily know which factor contributed to what aspect of the optimized process parameters. It is therefore difficult or impossible to ensure that AM parts produced by these methods are compliant for AM parts certification which ensures that AM parts meet the strict requirements demanded by the industry.

An aim of the present invention is therefore to provide a method for optimizing process parameters for AM parts of a material of a given composition in a time-efficient manner and compliant for AM part certification which ensure AM parts meet the strict quality, safety and consistency requirements demanded by the industry.

Another aim of the present invention is to provide a method for optimizing process parameters of a material of a given composition which is easy to implement.

Another aim of the present invention is to provide a method for obtaining optimized set of process parameters that can be assigned to certain regions of the AM part to be built based on explainable rules.

A further aim of the present invention is to provide a non-destructive method for optimizing process parameters of material of a given composition.

These aims are achieved by a method for optimizing one or more process parameters of an additive manufacturing process, comprising, prior to the step of manufacturing at least one AM part, preferably a metal AM part, the steps of :

a. generating, on a computing device, a 3D digital model of at least one calibration sample, preferably a set of calibration samples, to be manufactured by the additive manufacturing process;

b. manufacturing the calibration sample, preferably the set of calibration samples on a build platform of an additive manufacturing system, the calibration sample or each calibration sample being monitored by at least one electromagnetic sensor as it is being manufactured according to the 3D digital model, wherein the calibration sample or each calibration sample is made up of two or more test coupons, preferably on top of each other, for obtaining at least one optimized set of process parameters, and

c. storing the at least one optimized set of process parameters for subsequent use during the building process of said at least one AM part, which is representative of the test coupon.

The at least one optimized set of process parameters is obtained by carrying out the following steps:

i. manufacturing a first test coupon of the calibration sample with a first set of process parameters or a first test coupon of respective calibration samples with respective set of process parameters,

ii. sensing the first test coupon of the calibration sample or each first test coupon of respective calibration samples with said at least one electromagnetic sensor,

iii. changing at least one process parameter of the first set of process parameters or of said respective set of process parameters as a function of the data sensed by said at least one electromagnetic sensor to obtain an improved set of process parameter for the calibration sample or respective improved set of process parameters for respective calibration samples,

vi. manufacturing an additional test coupon of the calibration sample with the improved set of process parameters, or an additional test coupon of respective calibration samples with respective improved set of process parameters,

v. sensing the additional test coupon of the calibration sample or each additional test coupon of respective calibration samples with said at least one electromagnetic sensor, and

vi. if the data sensed during step v. do not correspond to a test coupon of an acceptable quality level, iterating steps iv. and v. until the data sensed for the additional test coupon or each additional test coupon correspond to an acceptable quality level of the coupon to obtain said at least one optimized set of process parameter for the calibration sample or each calibration sample.

In an embodiment, each calibration sample comprises at least three test coupons, preferably at least five test coupons arranged on top of each other.

In an embodiment, each test coupon is made up of at least five layers, preferably at least ten layers such that the thickness of the coupon is larger than the penetration depth of the electromagnetic field generated by said at least one electromagnetic sensor.

In an embodiment, the method comprises manufacturing on the build platform a first calibration sample comprising a plurality of test coupons of different shapes arranged next to each other and at least one additional calibration sample having a corresponding plurality of test coupons of shapes identical to the shapes of respective plurality of test coupons of the first calibration sample. Step b. of paragraph [0015] comprises:

i. manufacturing the plurality of test coupons of a first calibration sample with a unique set of process parameters per test coupon,

ii. sensing each test coupon of said first calibration sample with said at least one electromagnetic sensor;

iii. changing at least one process parameter of each unique set of process parameters per coupon as a function of the data sensed for the corresponding test coupon to obtain an improved set of process parameters for each test coupon,

iv. manufacturing the additional calibration sample with the plurality of test coupons with the corresponding improved set of process parameters for each test coupon of identical shape to the shape of respective test coupons of the first calibration sample,

v. sensing each test coupon of said additional calibration sample with said at least one electromagnetic sensor, and

vi. if the data sensed during step v. for at least one test coupon do not correspond to a test coupon of an acceptable quality level, iterating steps iv. and v. until the data sensed for at least one additional test coupon correspond to an acceptable quality level of the coupon to obtain said least one optimized set of process parameter.

In an embodiment, several optimized sets of process parameters are obtained during a single build cycle of the set of calibration samples. Each optimized set of process parameters is assigned to a specific geometry and stored for subsequent use for building a corresponding part of said at least one AM part.

In an embodiment, the test coupon of an acceptable quality level comprises a bulk density of at least 99%. The at least one electromagnetic sensor is an Eddy-current sensor. The optimized set of process parameters is obtained by finding the extremum of the signal acquired by Eddy-current sensor.

In an embodiment, an optimization algorithm is used to find said extremum, such as the steepest descent algorithm, the conjugate gradient algorithm or the Monte-Carlo algorithm.

In an embodiment, a threshold of quality of the test coupon is determined, for example a given value of porosity. The process parameters among layer thickness, hatch distance and scanning speed are optimized to reduce the time to build the test coupon without exceeding said threshold.

In an embodiment, the selected set of process parameters is maintained during additively manufacturing each test coupon as long as the quality factor inferred from the signal measured by said at least one electromagnetic sensor is within the acceptable range defined by the acceptable quality level.

In an embodiment, once said at least one optimized set of process parameters has been obtained, a mapping of the build platform is generated as a function of a specific quality that can be obtained for a multitude of areas on the build platform corresponding to the specific position of each calibration sample on the build platform.

In an embodiment, said mapping is used to design a build platform layout excluding zones, on the build platform which have shown to produce test coupons of lesser quality in comparison with other test coupons, for additive manufacturing of said at least one AM part.

In an embodiment, said mapping is used to correct one or more process parameters of respective optimized set of process parameters, such as laser scan speed, as a function of the position on the build platform. The corrected optimized set of process parameters is transferred to a machine controller of the additive manufacturing system so that real AM parts are built with the corrected optimized set of process parameters corresponding to their X-Y position of the build plate to reach a uniform quality for all positions on the build platform.

In an embodiment, the step b. of paragraph [0015] is carried out on different additive manufacturing machines. The differences in quality between the calibration samples are used to classify the different machines as a function of the quality of the metal pieces that are machined in said machines.

In an embodiment, the explored sets of process parameters and the corresponding measured quality factors on corresponding test coupons, as well as, in particular, the optimized set of process parameters for the calibration sample or each calibration sample, is used to compute a multidimensional process parameters' window yielding an acceptable quality level for said at least one AM part. A constrained optimization is performed on at least one process parameter of said optimized set of process parameters, for example the laser scanning speed, such that the new optimized set of process parameters is constrained within said process parameter window.

In an embodiment, the explored sets of process parameters and the corresponding measured quality factors on corresponding test coupons, as well as, in particular, the optimized set of process parameters for the calibration sample or each calibration sample, are used to compute a multidimensional process parameters' window yielding an acceptable quality level for said at least one AM part. The process parameters' window in an electronic format is transferred to a quality optimization algorithm used during the building process of said at least one AM part, so that said quality optimization algorithm constrains its search for optimum to the process parameters window to ensure that AM parts produced are compliant for AM part certification which ensures AM parts meet the strict quality requirements demanded by the industry.

**Brief Description of the Drawings**

The invention will be better understood with the aid of the description of several embodiments given by way of examples and illustrated by the figures, in which:

- Figure 1 shows a schematic perspective view of set of calibration samples on a build platform to carry out a method for optimizing one or more process parameters of an additive manufacturing process according to an embodiment;

- Figures 2 to 4 is a schematic view of different calibration samples comprising multiple coupons, whereby each coupon is built with a unique set of process parameters;

- Figure 5 is flow diagram of the additive manufacturing process for iteratively optimizing one or more process parameters during the manufacturing of one or more calibration samples to find an optimized set of process parameters according to the invention;

- Figure 6 is a schematic graph representing the concept of region of acceptable quality (or acceptance region) as a function of the variation of two process parameters, according to an embodiment;

- Figure 7 is a graph representing the correlation between the density of a part manufactured by a powder bed fusion process and the scan speed (all other process parameters being kept constant), wherein the density is determined by conventional methods (CT scanning, optical metallography and the Archimedes methods) and by the EC signal of an Eddy-current sensor;

- Figures 8a to 8c are graphs representing the qualitative relationship between the density of a part manufactured by a powder bed fusion process and respectively the laser power, the hatch spacing and the layer thickness, (for each plot, only the process parameter indicated in the x-axis is varied), and

- Figures 9a and 9b are schematic perspective views of different calibration samples with one control geometry per coupon.

**Detailed Description of possible embodiments of the Invention**

In the context of the present invention, a test coupon shall be understood as a part made of a material of a given composition which is representative of an AM part or a portion of the AM part. The test coupon may be made of metal using different power bed fusion (PBF) technologies such as SLM (Selective Laser Melting), DMLS (Direct Metal Laser Sintering), SLS (Selective Laser Sintering), SHS (Selective Heat Sintering) and EBM (Electron Beam Melting) or other additive manufacturing technologies such as DED (Directed Energy deposition), WAAM (Wire Arc Additive Manufacturing), Liquid Metal Jetting, or metal extrusion. The test coupon may also be made of non-metallic material using for example the binder jetting technology. A test coupon is manufactured using the same process parameters during the build cycle of the test coupon.

Test coupons are designed to be sensed by electromagnetic sensors, for example Eddy-current sensors or capacitive sensors. Given that the penetration depth of the electromagnetic field produced by an eddy current sensor driven at a frequency in the 100-500kHz range may vary approximately between 0.3mm and 1mm and that the thickness layer may vary between 20 and 120$\mu$m, a coupon must comprise at least five layers and preferably at least ten layers in order that the uppermost sensed layers may provide coherent data on the quality of the test coupon.

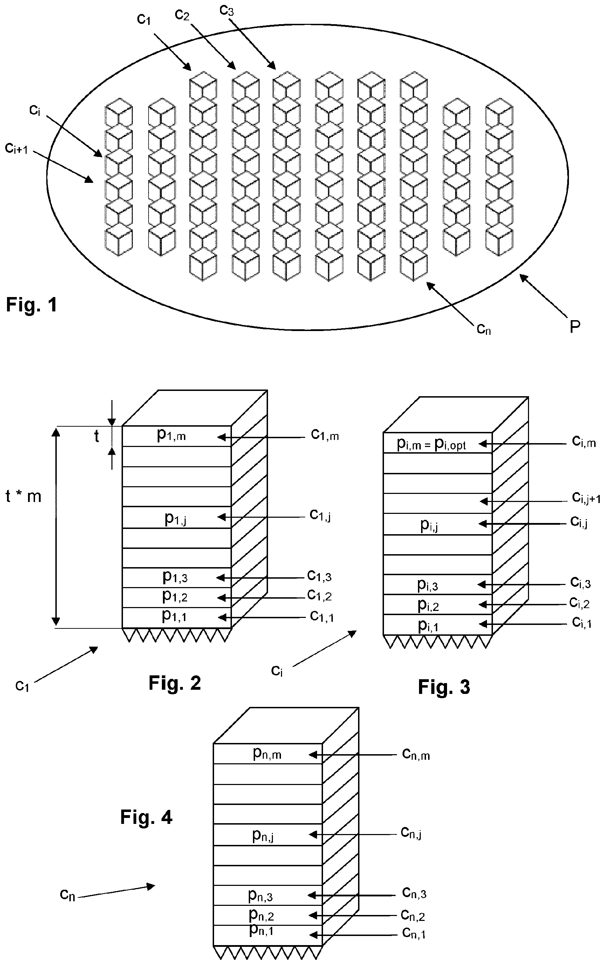

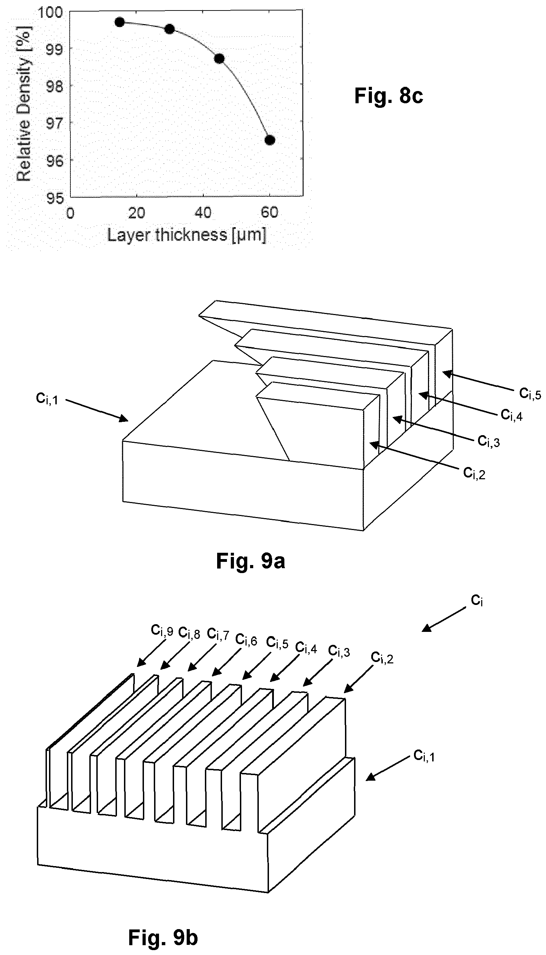

A calibration sample shall be understood, in the context of the present invention, as a piece made of several test coupons. The test coupons may be built on top of each other as shown in Figures 2 to 4 and possibly next to each other as shown in Figures 9a and 9b, whereby each coupon is built with a set of process parameters which is unique in comparison with the other test coupons.

The quality of a test coupon is a multi-parameter criterion comprising probability of presence of defects, mechanical integrity, density of manufactured material (related to the presence of porosity), homogeneity of the manufactured material etc. The quality criteria may also be based on the fact the material has a defined microstructure.

An acceptable quality level is a series of conditions that have to be met for the part to be considered acceptable (fit for a given purpose). The acceptable quality level comprises rejection thresholds in a subset of the following defect or discontinuity classes: i) Surface discontinuities such as surface roughness or unevenness, with a rejection threshold being a roughness or surface unevenness amplitude; ii) Porosity, with a rejection threshold typically being a maximum tolerable pore size, pore density or pore cluster size threshold; iii) Cracking, with a rejection threshold typically being a maximum acceptable crack size (maximum crack depth and/or length); iv) Lack of fusion, with a rejection threshold typically being a maximum volume over which inadequate sintering has occurred; v) Part dimensions and part deformation, with rejections thresholds typically being dimensional or positional tolerances around a nominal position or dimension, wherein the position can be that of a surface of the AM part or the position of the last sintered layer and wherein the dimension is typically a distance between part features such a walls, surfaces or edges; vi) Part density, with a rejection threshold typically being a minimum local density; and vii) Residual stress, with a rejection threshold being a maximum acceptable stress.

The quality factor of a test coupon shall be understood, in the context of the present invention, as collection of measurements of physical properties a test coupon that qualifies the AM part quality. A part or coupon is considered to be fit for a given purpose when its quality factor meets all relevant testing requirements in the field of use of the AM part, i.e., when the collection of measurements performed on the part/coupon and constituting the quality factor shows that a given acceptable quality level is met. In general, the quality factor is a collection of (e.g. physical) properties, all of which have to satisfy a collection of acceptance criteria (i.e. are within an acceptance window or range) defined by the acceptable quality level to meet the quality requirements imposed by a norm or application standard to be considered usable.

The quality factor as well as the productivity of the AM process are highly dependent of process parameters. It is therefore desirable to combine both part quality and process productivity considerations to find optimized process parameters. Typical optimization criteria may be for example: Environmental criteria such as the powder consumption per part or total energy expenditure per part; Economic criteria such as total cost per part, Productivity criteria such as part manufacturing time or usable fraction of the build volume; Robustness criteria such as the capacity of the process to yield acceptable parts over a broad range of poorly controlled parameters. Poorly controlled parameters could be the effective powder quality, uncontrolled machine-to-machine variations, or uncontrolled process variations. A combination of the above-mentioned optimization criteria may obviously be used. Another optimization criterion may be a part quality factor that is maximized for a given cost, time, powder consumption, or environmental impact per part.

Process parameters that influence the quality of an AM part generally fall into the following categories: energy beam (e.g. laser) and scanning parameters, powder bed properties, recoat parameters, and build environment parameters.

Laser and scanning parameters may comprise for example scan velocity (velocity at which laser beam moves across a build surface), scan spacing or hatch distance (distance between neighbouring laser passes), average power (measure of total energy output of a laser), mode (continuous wave or pulsed), beam shape, laser spot size in the processing plane and focus shift, beam compensation and offsets, other laser control parameters (skywriting, wobble, offsets, delays etc.), scanning strategies (parallel, paintbrush, chessboard, etc..), etc.

Powder bed properties may comprise for example layer thickness (height of a single power layer, impacting part resolution and process speed), powder layer density, powder layer quality (surface roughness, flatness, homogeneity etc.), power bed temperature (bulk temperature of the powder bed), thermal conductivity (measure of power bed's ability to conduct heat), deposition system parameters (e.g. recoater velocity, pressure, recoater type, number of deposition runs, feed factor). Build environment parameters may comprise for example shielding gas (usually Ar or $N_2$, but may also be He), oxygen level (oxygen can lead to oxide formation in metal), ambient temperature, build platform pre-heating temperature, build chamber pressure, gas flow velocity and temperature etc.

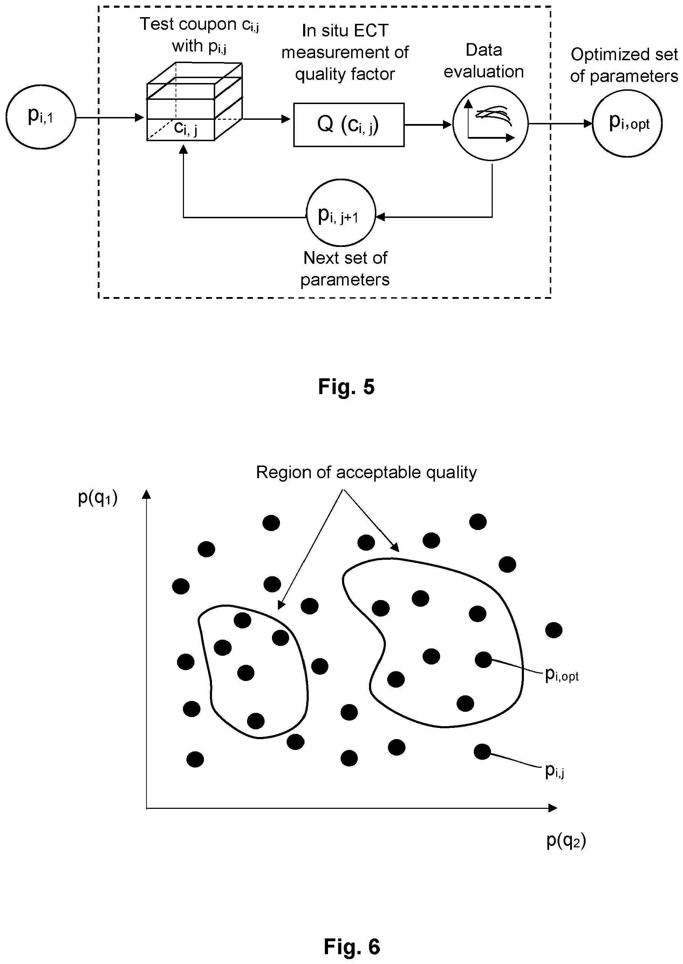

With reference to Figure 6, a region of the process parameter space (or a process parameter window) corresponding to an acceptable quality factor can be explored using the method for optimizing one or more process parameters of the additive manufacturing process according to the invention. Using the measured quality factors from different test coupon manufactured with different sets of process parameters, a window of process parameters, which is generally multidimensional, may be assigned to an acceptance region of an acceptable quality level. Consequently, any part built with process parameters within this window is compliant for AM part certification which ensures AM parts meet the strict quality requirements demanded by the industry.

Figure 6 shows a 2-dimension process parameter space for the sake of simplicity. However, the process parameter space is more likely to be of higher dimensions, i.e., a K-dimensional process parameter space, where the set of process parameters explored may be $q_1$, $q_2$, $q_3$ $q_4$...$q_k$, for example laser power $q_1$, hatch distance $q_2$, scanning speed $q_3$, layer thickness $q_4$, scanning strategies $q_5$, power bed temperature $q_6$, build chamber pressure $q_7$, etc.

For instance, for aero-engine components, which are subjected to high mechanical stresses, the test coupon may be considered to have an acceptable quality level if its relative density is above 99% (quality parameter 1) and if the longest surface breaking crack does not exceed 2mm (quality parameter 2). Conversely, AM parts which are not subjected to high mechanical stresses may have a degree of porosity such that the relative density of a test coupon below 95% is still considered to have an acceptable quality level.

Only a fraction of the above-mentioned process parameters is usually modified in order to find the process window of the process parameters that may create an object with an acceptable quality level. The most influential process parameters are Laser power $P$ [W], Hatch distance $h$ [μm], Scanning speed $v$ [mm/s] and layer thickness t [μm].

These process parameters are included in the Volumetric Energy Density VED [J/mm$^3$] equation:

$$\text{VED} = \frac{P}{h \cdot t \cdot v}$$

It is well established that the VED must be in a certain range for instance between 50 J/mm$^3$ and 200 J/mm$^3$ for 316L stainless steel (alloy dependent values), to obtain an optimum component density. In the method for optimizing one or more process parameters of an additive manufacturing process using for example power bed fusion as described therein, initial guess parameters pi,i must first be determined. The VED may be used to determine the initial guess parameters although the VED is a simplified model, which does not capture all the physics of the printing process. The variables of the above equation may be set arbitrary so that the VED is between the lower and upper thresholds. Alternatively, the process parameters influencing production time may be set to a desired time and the other variables may be adapted to ensure that the VED is between these lower and upper thresholds.

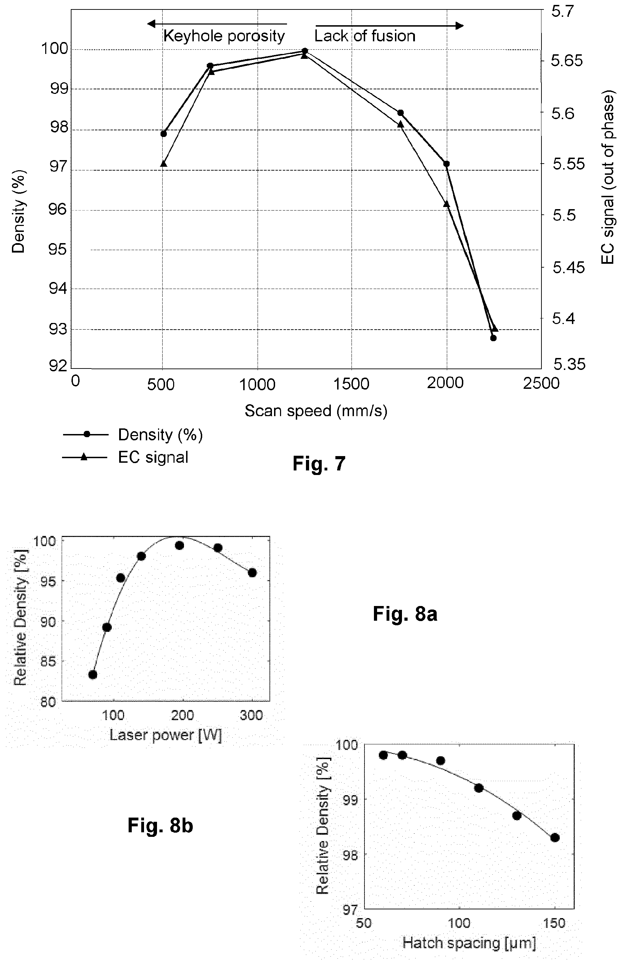

As shown by Figure 7 and Figures 8a to 8c, the variation of any of these variables, i.e. hatch distance h, scanning speed v, layer thickness t and laser power P, has a significant impact on the relative density of the test coupon.

For each iterating step, one or more of these variables of the VED equation are changed until an optimized set of process parameters is found. Other process parameters that influence that quality of an AM part, as thoroughly described above, may be varied.

If one considers the 4 independent parameters of the VED equation, and 5 values per parameter, this results in 625 different parameter sets. A systematic exploration of parameter sets is therefore extremely tedious if not impossible with the usual methods.

With reference to Figures 1 to 4, each calibration sample of the set of calibration samples, labelled $c_1$, $c_2...c_i...c_n$, comprises several test coupons labelled $c_{i,1}$, $c_{i,2}$, $c_{i,3}$, $...c_{i,m}$. At least one calibration sample is manufactured on the build platform P, preferably a set of calibration samples $c_1$, $c_2...c_i...c_n$, wherein the calibration sample or each calibration sample is designed to comprise at least two different test coupons $c_{i,1}...c_{i,j}...c_{i,m}$ on top of each other.

Each test coupon $c_{i,j}$ is arranged to be manufactured with a unique set of process parameters, $p_{i,j}$. Increasing the number of calibrations samples and the number of test coupons per calibration sample increases considerably the number of sets of process parameters that can be explored during a single build cycle. For example, assuming that there are eight calibrations samples to be manufactured, whereby each calibration sample comprises 20 test coupons, then 160 sets of process parameters can be investigated during the build cycle to find at least one set of optimal process parameters for at least one AM part to be printed or a portion thereof.

In an embodiment, a quality of a test coupon is sensed by one or more electromagnetic (e.g. Eddy-current) sensors (not shown) which may be mounted on the recoater of an additive manufacturing machine, for example a SLM machine, next to each other along an axis perpendicular to the direction of displacement of the recoater in the horizontal plane. In an alternative embodiment, the electromagnetic sensors may be mounted on a sensor supporting structure which is independent of the recoater. The electromagnetic sensors are arranged next to each other along an axis substantially perpendicular to the direction of the displacement of the sensor supporting structure across the build platform.

The quality of a test coupon (or a region of a real part), a (potentially multi-dimensional) quality factor is built from the response measured by the electromagnetic response sensors (and possibly others). This quality factor is therefore related to the quality of a part for a particular purpose and is compliant with non-destructive testing (NDT) norms. It means that a test coupon or a really manufactured part with a sufficiently good quality factor can be considered as compliant for the particular purpose. For instance, the absence of porosity and the absence of embedded cracks may guarantee that the manufactured part is compliant. One simple example of such a quality factor is the local material density inferred from the measured electromagnetic response of the electromagnetic sensor(s).

Referring to Figures 1 to 4, a set of calibration samples $c_1...c_i...c_n$ is built on the building platform P of the additive manufacturing system according to the 3D digital model which was generated on a computing device. Each calibration sample $c_i$ is made up of test coupons $c_{i,1}...c_{i,j}...c_{i,m}$. A first test coupon $c_{1,1}...c_{i,1}...c_{n,1}$ of each calibration sample is first built with the initial guess set(s) of parameters $p_{1,1}...p_{i,1}...p_{n,1}$. The electromagnetic sensors may be arranged on the recoater to move above each newly built layer of the test coupon of each calibration sample in order to sense the test coupon as it is being built.

As illustrated by Figure 5, at least one process parameter of the initial guess parameters pi,i is changed as a function of the data sensed by the electromagnetic sensor in order to obtain a second set(s) of process parameters $p_{i,2}$ or $p_{i,j+1}$ for building a second test coupon $c_{i,2}$. The process is iterated with additional sets of parameters $p_{i,1}$, $p_{i,2}....p_{i,m}$ in order to converge to an optimized set of process parameters $p_{i,opt}$ which will be used to manufacture an AM part or a portion of the AM part with an acceptable quality level for its application.

Only data corresponding to the uppermost sensed layer(s) are used for determining the next set of process parameters to converge to an optimal set of process parameters $p_{opt}$ or set of sets of parameters $p_{i,opt}$ as data obtained from underlying layers may be incoherent since the penetration depth of the electromagnetic field produced by the electromagnetic sensors may exceed the thickness of the built layers.

Alternatively, the electromagnetic sensors may be arranged to move above each test coupon once completed to acquire data relative to the quality of the test coupon, in particular on the degree of porosity of the test coupon which can be determined using the EC signal as shown in Figure 7.

The optimisation method may be aimed at finding the process parameters providing for example the highest relative part density. In embodiments using Eddy-current sensors, this is done using the fact that the extremum of the component of the eddy current signal corresponding to the electrical conductivity is also an extremum of the part density as shown in Figure 7. The results of the eddy current measurements of the respective test coupons are plotted as a function of the process parameters that have been varied. The optimisation problem can then be reduced to an extremum search.

Various optimization algorithms can be used to find this extremum, such as the steepest descent, conjugate gradient and Monte-Carlo algorithms, in order to generate new sets of process parameters for manufacturing a corresponding new set of test coupons with quality factor expected to be closer to the acceptable quality level.

In an advantageous embodiment, each calibration sample $c_i$ comprises several test coupons of different shapes. Figures 9a and 9b are examples of calibration samples comprising each several test coupons of different shapes. For example, with reference to Figure 9a, the initial test coupon $c_{i,1}$ is for example a

$10 \times 10 \times 2.5$mm$^3$ cube for optimizing the set of process parameters for bulk material while the additional test coupons are distinctive adjacent cantilever portions $c_{i,2}$, $c_{i,3}$, $c_{i,4}$, $c_{i,5}$ of different inclinations allowing to find an optimized set of process parameters $p_{i,opt}$ for each inclination.

In another example illustrated in Figure 9b, the initial test coupon $c_{i,1}$ is also a similar cube while the additional test coupons are distinctive adjacent wall portions $c_{i,2}$, $c_{i,3}$, $c_{i,4}$, $c_{i,5}$, $c_{i,6}$, $c_{i,7}$, $c_{i,8}$ of different thickness allowing to find an optimized set of process parameters $p_{i,opt}$ for each thickness.

The method can be straightforwardly extended to find the optimized set of process parameters $p_{i,opt}$ for each specific shape, for each cantilever and wall portion in the illustrated example. For this, two or more calibrations samples, with coupons of the same specific shapes, must be built. More particularly, the following steps must be performed: i) manufacturing each test coupon $c_{i,j}$ of the two or more calibration samples, each with a set of process parameters $p_{i,j}$; ii) sensing each test coupon of said one of the at least two calibration samples; iii) changing at least one process parameter of each set of process parameters $p_{i,j}$ as a function of the data sensed for the corresponding test coupon $c_{i,j}$ to obtain an improved set of process parameters for each test coupon, iv) manufacturing each test coupon $c_{i,j+1}$ with the new sets of improved process parameters $p_{i,j+1}$, and v) repeating steps ii) to iv) to obtain a list of process parameter sets $p_{i,1}...p_{i,j},...,p_{i,m}$ for each specific shape to allow the determination of an optimized set of process parameters $p_{i,opt}$ for each shape.

Depending on the specific shapes being investigated, for instance if the shape contains parts containing oblique parts, cantilever portions or overhangs, the test coupons may include a vertical support structure used to allow the manufacturing of these special geometries. Both the bulkier support structure and the actual specific shape can be sensed by one or more electromagnetic sensors and optimized independently.

When multiple AM parts are printed within one build cycle, layout and location of the parts on the build platform can be critical. The quality of the AM part can vary between different locations on the build platform. To address this issue, once the optimized set of parameters $p_{i,opt}$ has been found after multiple iterating steps, an additional test coupon $c_{i,m+1}$ is built on top of each calibration sample using respective optimized set of process parameters $p_{i,opt}$. The additional test coupon $c_{i,m+1}$ of each calibration sample is then sensed by at least one electromagnetic sensor (e.g. Eddy-current sensor) to determine the quality (e.g. porosity) of each additional test coupon of the set calibration samples with respect to the specific position of each calibration sample on the build platform. A mapping of the build platform P is then realized as a function of a specific quality (e.g. porosity) of each additional test coupon $c_{i,m+1}$ and their specific location on the build platform.

This mapping may then be used to design a build platform layout excluding zones on the build platform which have shown to produce test coupons of lesser quality in comparison with other test coupons.

In another embodiment, the mapping may be used to modify one or more process parameters of respective sets of optimized process parameters $p_{i,opt}$, such as laser scan speed, to obtain a X-Y position-dependent optimized sets of process parameters to reach a uniform quality on the build platform. The modified optimized set of process parameters for each specific position on the build platform may then be saved for manufacturing an AM part or a portion of the AM part which is representative of the test coupon.

The optimisation data collected with the methods described above (i.e. the optimised parameters, the quality factors obtained for each parameter set, the variations across the build plate, among other) are characteristic of the AM machine type. Assuming that the same powder is used, all the machines of the same type should give very similar optimisation data, with small machine to machine variations reflecting the tolerances in the machine design, components, fabrication, and assembly. Small, acceptable variations in the optimisation data, for instance caused by the aging of some components, can be corrected by applying the method for optimizing one or more process parameters of the additive manufacturing process according to the invention and modifying the corresponding fabrication parameters accordingly.

Also, performing at regular time intervals the method for optimizing one or more process parameters of the additive manufacturing process according to the invention can advantageously be used in the frame of machine maintenance procedure to verify that the AM machine is performing according to its specifications. The optimisation data obtained at a certain point in the machine lifetime must be in the acceptable range defined by the user or the Original Equipment Manufacturers (OEM). Finally, the comparison of the optimisation data with reference values obtained on a reference machine can be used by the machine manufacturer as part of the machine pre-delivery inspection procedures.

The method for optimizing one or more process parameters of the additive manufacturing process according to the invention may also be used to classify the different machines as a function of the quality of the metal pieces they can manufacture. This classification may then advantageously be used for maintenance of the additive manufacturing machines that have produced calibration samples of significant lower quality as compared to other machines.

The acceptance region of process parameter space as described above notably with reference to Figures 6 can be constructed during the optimization process to maximize the quality (search for the optimum). In an embodiment, the inclusion of additional sets of process parameters beyond the found accepted quality may be advantageously forced, i.e. it is advantageous not to stop the search for the optimum quality when the lowest acceptable quality factor (i.e., the multi-dimensional quality factor just within the acceptable bounds defined by a given acceptable quality level) has been reached but to include some additional sets of process parameters (and the corresponding test coupons) beyond that point to better evaluate the boundaries of this acceptance region. The acceptance region may consist in several disconnected regions as shown in Figure 6 (i.e. the concept of acceptance region does imply neither connectivity nor convexity).

In an embodiment, the boundaries of the acceptance region of the process parameters space are obtained by interpolation if the measured quality factors do not fall precisely on the limit acceptance values. In a multi-dimensional case, this is done for instance by an interpolation (linear in the simplest case but not limited to this) within the simplices obtained by tessellation of the multi-dimensional process parameter space. As an extension, other space tessellation can be used producing other types of elements than simplices (e.g. quads, hexagonal tessellation, etc.).

In an embodiment, the acceptance region is used to perform an additional optimization over the process parameters with a different criterion than quality, e.g. the manufacturing speed (i.e. the set of process parameters within the acceptance region which minimize the manufacturing time).

In an embodiment, the acceptance region in the process parameter space is transferred to a quality optimization algorithm used during the manufacturing of real parts to constrain the optimization algorithm to the region of acceptable quality. This quality optimization algorithm may be completely independent from the one used to determine the quality acceptance region in process parameters and may rely on a completely different set of sensors to perform its task.

This ensures that produced real AM parts are compliant irrespective of the decision of the quality optimization algorithm since it is constrained to remain within the region of acceptable quality. In addition, it provides a level of explainability of the quality optimization algorithm. Without this, there can be no guarantee that the process parameters determined by said quality optimization algorithm during the manufacturing of real AM parts remain in a region of process parameters ensuring the compliance of produced parts.

## Claims

1. A method for optimizing one or more process parameters of an additive manufacturing process, comprising, prior to the step of manufacturing at least one AM part, preferably a metal AM part, the steps of :

    a. generating, on a computing device, a 3D digital model of at least one calibration sample, preferably a set of calibration samples, to be manufactured by the additive manufacturing process;

    b. manufacturing the calibration sample ($c_i$), preferably the set of calibration samples ($c_1...c_i...c_n$) on a build platform (P) of an additive manufacturing system, the calibration sample ($c_i$) or each calibration sample ($c_1...c_i...c_n$) being monitored by at least one electromagnetic sensor as it is being manufactured according to the 3D digital model, wherein the calibration sample ($c_i$) or each calibration sample is made up of two or more test coupons ($c_{i,1}...c_{i,j}...c_{i,m}$), preferably on top of each other, for obtaining at least one optimized set of process parameters ($p_{i,opt}$), and

    c. storing the at least one optimized set of process parameters ($p_{i,opt}$) for subsequent use during the building process of said at least one AM part, which is representative of the test coupon ($c_{i,m}$),

wherein said at least one optimized set of process parameters ($p_{i,opt}$) is obtained by carrying out the following steps:

    i. manufacturing a first test coupon ($c_{i,1}$) of the calibration sample ($c_i$) with a first set of process parameters ($p_{i,1}$) or a first test coupon ($c_{1,1}...c_{i,1}...c_{n,1}$) of respective calibration samples ($c_1...c_i,...c_n$) with respective set of process parameters ($p_{1,1}...p_{i,1}...p_{n,1}$),

    ii. sensing the first test coupon ($c_{i,1}$) of the calibration sample or each first test coupon ($c_{1,1}...c_{i,1}...c_{n,1}$) of respective calibration samples ($c_1...c_i,...c_n$) with said at least one electromagnetic sensor,

    iii. changing at least one process parameter of the first set of process parameters ($p_{i,1}$) or of said respective set of process parameters ($p_{1,1}...p_{i,1}...p_{n,1}$) as a function of the data sensed by said at least one electromagnetic sensor to obtain an improved set of process parameter ($p_{i,2}$) for the calibration sample ($c_i$) or respective improved set of process parameters ($p_{1,2}...p_{i,2}...p_{n,2}$) for respective calibration samples ($c_1...c_i,...c_n$),

    iv. manufacturing an additional test coupon ($c_{i,2}$) of the calibration sample ($c_i$) with the improved set of process parameters ($p_{i,2}$), or an additional test coupon ($c_{1,2}...c_{i,2}...c_{n,2}$) of respective calibration samples ($c_1...c_i,...c_n$) with respective improved set of process parameters ($p_{1,2}...p_{i,2}...p_{n,2}$)

    v. sensing the additional test coupon ($c_{i,2}$) of the calibration sample ($c_i$) or each additional test coupon ($c_{1,2}...c_{i,2}...c_{n,2}$) of respective calibration samples ($c_1...c_i,...c_n$) with said at least one electromagnetic sensor, and

vi. if the data sensed during step v. do not correspond to a test coupon of an acceptable quality level, iterating steps iv. and v. until the data sensed for the additional test coupon $(c_{i,j})$ or each additional test coupon correspond to an acceptable quality level of the coupon to obtain said at least one optimized set of process parameter $(p_{i,opt})$ for the calibration sample $(c_i)$ or each calibration sample.

2. The method of claim 1, wherein each calibration sample $(c_1, c_2...c_i...c_n)$ comprises at least three test coupons $(c_{i,1}, c_{i,2}, c_{i,3})$, preferably at least five test coupons $(c_{i,1}, c_{i,2}, c_{i,3}, c_{i,4}, c_{i,5})$ arranged on top of each other.

3. The method of claim 1 or 2, wherein each test coupon $(c_{i,1}...c_{i,j}....c_{i,m})$, is made up of at least five layers, preferably at least ten layers such that the thickness of the coupon is larger than the penetration depth of the electromagnetic field generated by said at least one electromagnetic sensor.

4. The method of any preceding claim, comprising manufacturing on the build platform (P) a first calibration sample $(c_i)$ comprising a plurality of test coupons $(c_{i,1}, c_{i,2}, c_{i,3}..... c_{i,m})$ of different shapes arranged next to each other and at least one additional calibration sample having a corresponding plurality of test coupons $(c_{i,1}, c_{i,2}, c_{i,3}..... c_{i,m})$ of shapes identical to the shapes of respective plurality of test coupons of the first calibration sample, wherein step b. of claim 1 comprises:

    i. manufacturing the plurality of test coupons $(c_{i,1}, c_{i,2}, c_{i,3} c_{i,m})$ of a first calibration sample with a unique set of process parameters $(p_{i,j})$ per test coupon;
    ii. sensing each test coupon $(c_{i,1}, c_{i,2}, c_{i,3} c_{i,m})$ of said first calibration sample with said at least one electromagnetic sensor;
    iii. changing at least one process parameter of each unique set of process parameters $(p_{i,j+1})$ per coupon as a function of the data sensed for the corresponding test coupon to obtain an improved set of process parameters $(p_2)$ for each test coupon,
    iv. manufacturing the additional calibration sample with the plurality of test coupons $(c_{i,1}, c_{i,2}, c_{i,3}.... c_{i,m})$ with the corresponding improved set of process parameters $(p_2)$ for each test coupon of identical shape to the shape of respective test coupons of the first calibration sample,
    v. sensing each test coupon $(c_{i,1}, c_{i,2}, c_{i,3}..... c_{i,m})$ of said additional calibration sample with said at least one electromagnetic sensor, and
    vi. if the data sensed during step v. for at least one test coupon do not correspond to a test coupon of an acceptable quality level, iterating steps iv. and v. until the data sensed for at least one additional test coupon $(c_{i,m})$ correspond to an acceptable quality level of the coupon to obtain said least one optimized set of process parameter $(p_{i,opt})$

5. The method of any preceding claim, wherein several optimized sets of process parameters $(p_{i,opt})$ are obtained during a single build cycle of the set of calibration samples $(c_1, c_2...c_i...c_n)$, each optimized set of process parameters being assigned to a specific geometry and stored for subsequent use for building a corresponding part of said at least one AM part.

6. The method of any preceding claim, wherein the test coupon of an acceptable quality level comprises a bulk density of at least 99%, and wherein said at least one electromagnetic sensor is an Eddy-current sensor, the optimized set of process parameters $(p_{i,opt})$ is obtained by finding the extremum of the signal acquired by Eddy-current sensor.

7. The method of the preceding claim, wherein an optimization algorithm is used to find said extremum, such as the steepest descent algorithm, the conjugate gradient algorithm or the Monte-Carlo algorithm.

8. The method according to any preceding claim, wherein a threshold of quality of the test coupon is determined, for example a given value of porosity, and wherein the process parameters among layer thickness, hatch distance and scanning speed are optimized to reduce the time to build the test coupon without exceeding said threshold.

9. The method according to any preceding claim, wherein the selected set of process parameters are maintained during additively manufacturing each test coupon as long as the quality factor inferred from the signal measured by said at least one electromagnetic sensor is within the range of the acceptable quality level.

10. The method according to any preceding claim, wherein once said at least one optimized set of process parameters $(p_{opt})$ has been obtained, a mapping of the build platform (P) is generated as a function of a specific quality for a multitude of areas on the build platform corresponding to the specific position of each calibration sample $(c_1...c_i...c_n)$ on the build platform.

11. The method according to the preceding claim, wherein said mapping is used to design a build platform layout excluding zones, on the build platform which have shown to produce test coupons of lesser quality in comparison with other test coupons, for additive manufacturing of said at least one AM part.

12. The method according to claim 10, wherein said mapping is used to correct one or more process parameters of respective optimized set of process parameters ($p_{i,opt}$), such as laser scan speed, as a function of the position on the build platform, the corrected optimized set of process parameters being transferred in an electronic format to a machine controller of the additive manufacturing system so that real AM parts are built with the corrected optimized set of process parameters corresponding to their X-Y position of the build plate (P) to reach a uniform quality for all positions on the build platform.

13. The method according to the preceding claim, wherein the step b. of claim 1 is carried out on different additive manufacturing machines, and wherein the differences in quality between the calibration samples are used to classify the different machines as a function of the quality of the metal pieces that are machined in said machines.

14. The method according to any preceding claim, wherein the explored sets of process parameters ($p_{i,j}$) and the corresponding measured quality factors on corresponding test coupons ($c_{i,j}$), as well as, in particular, the optimized set of process parameters ($p_{i,opt}$) for the calibration sample ($c_i$) or each calibration sample, are used to compute a multidimensional process parameters' window yielding an acceptable quality level for said at least one AM part, and wherein a constrained optimization is performed on at least one process parameter of said optimized set of process parameters ($p_{i,opt}$), for example the laser scanning speed, such that the new optimized set of process parameters is constrained within said process parameter window.

15. The method according to any of claim 1 to 13, wherein the explored sets of process parameters ($p_{i,j}$) and the corresponding measured quality factors on corresponding test coupons ($c_{i,j}$), as well as, in particular, the optimized set of process parameters ($p_{i,opt}$) for the calibration sample ($c_i$) or each calibration sample, are used to compute a multidimensional process parameters' window yielding an acceptable quality level for said at least one AM part, and wherein said process parameters' window is transferred in an electronic format to a quality optimization algorithm used during the building process of said at least one AM part, so that said quality optimization algorithm constrains its search for optimum to the process parameters window to ensure that AM parts produced are compliant for AM part certification which ensures AM parts meet the strict quality requirements demanded by the industry.

Fig. 1

Fig. 2

Fig. 3

Fig. 4

**Fig. 5**

**Fig. 6**

**Fig. 7**

**Fig. 8a**

**Fig. 8b**

**Fig. 8c**

**Fig. 9a**

**Fig. 9b**

Europäisches
Patentamt

European
Patent Office

Office européen
des brevets

# EUROPEAN SEARCH REPORT

Application Number

EP 22 16 2312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/298499 A1 (GUPTA VIPUL KUMAR [US] ET AL) 24 September 2020 (2020-09-24) | 1-5,8,9, 13-15 | INV. B22F10/14 |
| Y | * paragraphs [0005], [0006], [0009], [0010] – [0012], [0023], [0030]; figures 2,4,3b,5A,5b,6 * <br> * paragraphs [0030] – [0032], [0035], [0037] – [0038], [0040] – [0041], [0043] * <br> * paragraph [0044]; claims 1-2,5,10-11,18-20 * <br> ----- | 6,7, 10-12, 14,15 | B22F10/20 B22F10/28 B22F10/31 B22F12/90 B33Y10/00 B33Y50/02 G05B19/4099 B22F10/85 B22F10/366 B22F10/38 |
| Y | SPIERINGS ADRIAAN BERNARDUS ET AL: "Direct part density inspection in laser powder bed fusion using eddy current testing", , <br> 23 September 2021 (2021-09-23), pages 1-5, XP055956173, DOI: 10.3929/ethz-b-000516133 Retrieved from the Internet: URL:https://www.research-collection.ethz.ch/bitstream/handle/20.500.11850/516133/Spierings(2021)-Directpartdensityinspectioninlaserpowderbedfusionusingeddycurrenttesting.pdf?sequence=1&isAllowed=y> <br> * abstract; figures 1,3,6-7 * <br> * section 3.3 * <br> ----- | 6,7 | |
| Y | WO 2020/249619 A1 (SLM SOLUTIONS GROUP AG [DE]) 17 December 2020 (2020-12-17) * claims 1-14; figures 1,4 * <br> ----- | 10-12 | |
| Y | WO 2021/197762 A1 (SLM SOLUTIONS GROUP AG [DE]) 7 October 2021 (2021-10-07) * page 23, last paragraph – page 2, paragraph first * <br> * page 21, paragraph 4th – page 22, paragraph 1st * <br> ----- | 10-12 | |

-/--

TECHNICAL FIELDS SEARCHED (IPC)

B22F
G05B
B33Y
B29C

The present search report has been drawn up for all claims

| Place of search | Date of completion of the search | Examiner |
|---|---|---|
| The Hague | 15 September 2022 | Aliouane, Nadir |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## EUROPEAN SEARCH REPORT

Application Number

EP 22 16 2312

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 842 217 A1 (TECH RES ASSOCIATION FUTURE ADDITIVE MANUFACTURING [JP]) 30 June 2021 (2021-06-30) * paragraphs [0004], [0006], [0010]; claims 1-15; figures 1-2,4-6,7b,8a,9a,9b,10 * | 14,15 | |

TECHNICAL FIELDS SEARCHED (IPC)

The present search report has been drawn up for all claims

| Place of search | Date of completion of the search | Examiner |
|---|---|---|
| The Hague | 15 September 2022 | Aliouane, Nadir |

## ANNEX TO THE EUROPEAN SEARCH REPORT
## ON EUROPEAN PATENT APPLICATION NO.

EP 22 16 2312

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2022

| Patent document cited in search report | | Publication date | Patent family member(s) | | Publication date |
|---|---|---|---|---|---|
| US 2020298499 | A1 | 24-09-2020 | CN | 113840675 A | 24-12-2021 |
| | | | EP | 3941667 A1 | 26-01-2022 |
| | | | US | 2020298499 A1 | 24-09-2020 |
| | | | WO | 2020191263 A1 | 24-09-2020 |
| WO 2020249619 | A1 | 17-12-2020 | CN | 114126785 A | 01-03-2022 |
| | | | EP | 3983152 A1 | 20-04-2022 |
| | | | JP | 2022537514 A | 26-08-2022 |
| | | | WO | 2020249619 A1 | 17-12-2020 |
| WO 2021197762 | A1 | 07-10-2021 | NONE | | |
| EP 3842217 | A1 | 30-06-2021 | EP | 3842217 A1 | 30-06-2021 |
| | | | JP | 6980115 B2 | 15-12-2021 |
| | | | JP | WO2020039581 A1 | 10-08-2021 |
| | | | US | 2021299754 A1 | 30-09-2021 |
| | | | WO | 2020039581 A1 | 27-02-2020 |

EPO FORM P0459

For more details about this annex : see Official Journal of the European Patent Office, No. 12/82

**EP 4 245 440 A1**

**Patent documents cited in the description**

- US 2020272128 A
- WO 2018217903 A1
- US 20190004496 A